Europäisches Patentamt

European Patent Office

Office européen des brevets

⑩

(11) Publication number: **0 030 080**
**B2**

(12) **NEW EUROPEAN PATENT SPECIFICATION**

(45) Date of publication of the new patent specification: **11.04.90**

(21) Application number: **80303804.1**

(22) Date of filing: **27.10.80**

(51) Int. Cl.⁵: **C 08 F 214/08,** C 08 F 2/24 //
(C08F214/08, 214:06, 220:10, 220:04)

(54) **Vinylidene chloride copolymer latex composition and method of coating using it.**

(30) Priority: **21.11.79 GB 7940267**

(43) Date of publication of application:
**10.06.81 Bulletin 81/23**

(45) Publication of the grant of the patent:
**11.04.90 Bulletin 90/15**

(45) Mention of the opposition decision:
**01.08.84 Bulletin 84/31**

(84) Designated Contracting States:
**AT BE CH DE FR GB IT LI LU SE**

(56) References cited:
**FR-A-2 374 342**
**GB-A- 639 999**
**US-A-2 651 626**

**C.A. Vol. 82, 1975, Nr.99476n**
**Kunststoff-Handbuch, Vol.II, Carl Hanser Verlag,**
**München, 1963, page 50, paragraph 2.1.2.6.**

The file contains technical information
submitted after the application was filed and
not included in this specification

(73) Proprietor: **IMPERIAL CHEMICAL INDUSTRIES PLC**
**Imperial Chemical House, Millbank**
**London SW1P 3JF (GB)**

(72) Inventor: **Padget, John Christopher**
**21 Ennerdale Drive**
**Frodsham Cheshire (GB)**
Inventor: **Burgess, Anthony Joseph**
**Hazeldene Top Road**
**Frodsham Cheshire (GB)**

(74) Representative: **Sheller, Alan et al**
**Imperial Chemical Industries PLC Legal**
**Department: Patents PO Box 6**
**Welwyn Garden City Herts, AL7 1HD (GB)**

## Description

This invention relates to copolymer compositions and more particularly to aqueous latex compositions comprising copolymers of vinylidene chloride and the use thereof in providing protective coatings.

In the specification of our UK Patent 1 558 411 there are described aqueous latices of copolymers of (i) vinylidene chloride, (ii) vinyl chloride, (iii) one or more alkyl acrylates having from 1 to 12 carbon atoms in the alkyl group and/or one or more alkyl methacrylates having from 2 to 12 carbon atoms in the alkyl group and (iv) one or more aliphatic alpha-beta-unsaturated carboxylic acids, the proportion of vinylidene chloride being from 65 to 90 parts by weight, the proportion of the said alkyl acrylates and/or methacrylates being from 2 to 15 parts by weight and the proportion of the said carboxylic acids being from 0.2 to 8 parts by weight, per hundred parts by weight of the total vinylidene chloride and vinyl chloride.

In that specification the preferred proportion of the said alkyl acrylate(s) and/or methacrylate(s) was stated to be from 4 to 10 parts by weight per hundred parts by weight of total vinylidene chloride and vinyl chloride.

We have now found that latices of copolymers containing a relatively higher proportion of alkyl acrylate(s) and/or methacrylate(s) and a certain proportion of vinylidene chloride (as hereinafter defined), while still having good protective properties give films having improved thermal stability. The inclusion of an unsaturated carboxylic acid, as used in the above-discussed prior art latices, is retained in order to further improve the adhesion of films formed from the latex.

According to the present invention there is provided an aqueous latex comprising a copolymer of (i) vinylidene chloride, (ii) vinyl chloride, and (iii) one or more alkyl acrylates or alkyl methacrylates having from 1 to 12 carbon atoms in the alkyl group, and (iv) one or more aliphatic alpha-beta unsaturated carboxylic acids, characterised in that:

(a) the proportion of vinylidene chloride is from 50 to 75 parts by weight per hundred parts by weight of total vinylidene chloride and vinyl chloride,

(b) the proportion of vinylidene chloride is not more than 75 parts by weight per hundred parts by weight of the total vinylidene chloride, vinyl chloride and the said acrylate(s) and/or methacrylate(s), and

(c) the proportion of the said alkyl acrylate(s) and/or methacrylate(s) is from 18 to less than 45 parts by weight per hundred parts by weight of total vinylidene chloride and vinyl chloride, said latex having a minimum film-forming temperature within the range from 6°C to 25°C.

The proportion of the said aliphatic alpha-beta unsaturated carboxylic acid(s) preferably does not exceed 8 parts by weight per hundred parts by weight of total vinylidene chloride and vinyl chloride, and in general it is preferred that the proportion of any such acid does not exceed 5 parts by weight per hundred parts by weight of total vinylidene chloride and vinyl chloride.

The proportion of vinylidene chloride is from 50 to 75 parts by weight per hundred parts by weight of total vinylidene chloride and vinyl chloride.

The proportion of the said alkyl acrylate(s) and/or methacrylate(s) is preferably from 18 to 35 parts by weight per hundred parts by weight of total vinylidene chloride and vinyl chloride.

The preferred alkyl acrylate is 2-ethylhexyl acrylate; other alkyl acrylates which may be used include methyl acrylate and butyl acrylate; alkyl methacrylates which may be used include methyl methacrylate, butyl methacrylate and 2-ethylhexyl methacrylate.

The preferred unsaturated carboxylic acid is acrylic acid; other carboxylic acids which may be used include methacrylate acid, itaconic acid and citraconic acid.

Thus the preferred copolymers are those derived from vinylidene chloride, vinyl chloride, 2-ethylhexyl acrylate and acrylic acid.

Minor proportions of additional co-monomers may also be incorporated in the copolymers of the present invention, for example, comonomers having the function of increasing the adhesion of the latex film to specific substrates or co-monomers having functional groups capable of crosslinking. Thus additional co-monomers may include copolymerisable vinyl monomers having, for example, sulphonate or phosphate functionality (for improving adhesion) or, for example, having epoxy or hydroxy functionality to allow subsequent crosslinking.

The copolymerisation may be carried out by well-established emulsion techniques, for example, as described in UK Patent 1 558 411.

In a preferred method of copolymerisation, at least a major proportion of the vinyl chloride component (preferably the whole of the vinyl chloride component) is present in the reaction vessel from the start of the reaction, together with a portion of the other monomer components, the remaining portions of the monomers being introduced (preferably as a mixture thereof) during the course of the reaction.

The copolymer latex may be used directly as a surface-coating composition or may be used as a component in the formulation of a surface-coating composition, for example a paint composition comprising the copolymer latex together with conventional paint components, for example, pigments, thickening agents, plasticisers, coalescing solvents, defoamers, pigment dispersants, wetting aids or fungicides.

The copolymer is such that the minimum film-forming temperature of the latex is in the range from 6°C to 25°C, as this is especially convenient for most applications.

A water-based latex comprising one or more copolymers according to the present invention forms stable films which have good protective properties on a variety of substrates (especially metallic substrates, for example steel), the films having good chemical resistance, good thermal stability, low permeability to water vapour and being compatible with most anti-corrosive pigments.

The invention is illustrated by the following Examples. Unless otherwise stated all parts and percentages are by weight.

## Example 1

An aqueous copolymer latex containing vinylidene chloride 56.2%; vinyl chloride 25.9%; 2-ethylhexyl acrylate 16.0%, and acrylic acid 1.9% was prepared by copolymerisation in an autoclave at 60°C, using sodium lauryl sulphate as surface-active agent, ammonium persulphate as initiator and sodium metabisulphite as activator.

This copolymer composition corresponds to 68.4 parts of vinylidene chloride, 19.5 parts of 2-ethylhexyl acrylate and 2.3 parts of acrylic acid per hundred parts of total vinylidene chloride and vinyl chloride.

The initial charge of monomers to an autoclave consisted of vinylidene chloride (10.1 kg); vinyl chloride (17.4 kg); 2-ethylhexyl acrylate (1.89 kg) and acrylic acid (0.09 kg). A monomer mixture consisting of vinylidene chloride (25.5 kg) 2-ethylhexyl acrylate (10.2 kg) and acrylic acid (1.42 kg) was fed to the autoclave over a period of 5 hours, together with aqueous solutions of ammonium persulphate, sodium metabisulphite and surfactant (sodium lauryl sulphate).

At the end of the reaction period the unconverted monomer was vented off and vacuum was applied to reduce the residual monomer content of the latex. The monomer content was further reduced by bubbling nitrogen through the latex while the temperature was maintained at 60°C.

119.1 kg of latex with a solids content of 54.8% were recovered from the autoclave. The latex had a minimum film-forming temperature of 9°C. The latex, when neutralised to pH 7 with ammonia solution and thickened by the addition of 0.2% 'Thickner LN' (GAF Corporation, USA) was applied to a mild steel test-panel using a No. 8 Meyer bar. The film was dried for 24 hours at 25°C (relative humidity 50%); a second coat was then applied in the same manner and allowed to dry for 7 days at 25°C (relative humidity 50%). The coated panel passed 70 in. lb (corresponding to 80.6 kg cm) in the 'Gardner Reverse Impact Tester' (ASTM D2794—69) and had excellent adhesion (GtO rating according to German standard test DIN 53151).

The panel was inspected after 1000 hours' exposure; the ASTM Blister Rating around a cross-cut was 4F but the remainder of the panel was unaffected. (The ASTM Blister Rating is a standard scale defined in ASTM D714—56.' It defines the size and frequency of the blisters which are formed. The size rating goes from 1 to 10 with the larger the number the smaller the blister size; microblisters are too small to be on the scale. The frequency ratings are N = "None", F = "Few", MD = "Medium Dense" and D = "Dense". Thus 4F refers to blisters of size rating 4 at a frequency rating of F where F equals "Few").

## Example 2

An aqueous copolymer latex containing vinylidene chloride 47.6%; vinyl chloride 29.3%; 2-ethylhexyl acrylate 21.2% and acrylic acid 1.9% was prepared by a method similar to that described in Example 1. (This copolymer composition corresponds to 61.9 parts of vinylidene chloride; 27.6 parts of 2-ethylhexyl acrylate and 2.5 parts of acrylic acid per hundred parts of total vinylidene chloride and vinyl chloride.

116.8 kg of latex with a solids content of 53.1% were recovered from the autoclave. The minimum film-forming temperature of the latex was 10°C. Coated steel panels were prepared from the latex as described in Example 1. The coated panel passed 70 in. lb (80.6 kg cm) in the impact test and showed excellent adhesion (GtO rating). The panel exposed to the salt spray test (1000 hours) showed dense microblisters around the crosscut but the remainder of the panel was unaffected.

## Example 3

An aqueous copolymer latex containing vinylidene chloride 42.3%; vinyl chloride 33.3%; 2-ethylhexyl acrylate 22.4% and acrylic acid 2.0% was prepared by a method similar to that described in Example 1. (This copolymer composition corresponds to 56.0 parts of vinylidene chloride; 29.6 parts of 2-ethylhexyl acrylate and 2.6 parts of acrylic acid per hundred parts of total vinylidene chloride and vinyl chloride).

The solids content of the latex was 53.0% and the minimum film-forming temperature was 11°C.

Coated steel panels were prepared from the latex as described in Example 1. The results of the impact test and the salt spray test were the same as obtained in Example 2.

The thermal stability of a film prepared from the latex was assessed as follows. The pH of the latex was adjusted to 7.0 by addition of concentrated ammonia solution. The latex was then added to a 2% aqueous solution of "Methocel" J12 containing butyl cellosolve to give a thickened latex containing 0.5% of "Methocel" J12 and 5% of butyl cellosolve (both based on the solids content of the latex). Films from the thickened latex were cast on clear glass plates, using an applicator with a clearance of 350 μm, and allowed to dry for 24 hours. The absorbance of the films was measured at wavelengths of 400 nm (the wavelength relating to discolouration) and 650 nm (the "baseline" wavelength). The films were then heated for several days in an oven at 80°C; the change in absorbance at the two wavelengths was measured periodically during this period. The net absorbance at 400 nm (the difference between absorbance at 400 nm and absorbance at 650 nm) was used as a measure of thermal degradation. An arbitrary "yellowing index" was based upon the mean rate of increase with time of net absorbance over the first 3 days per unit film thickness, this being defined as follows: yellow index = 1/3 (normalised net absorbance on day 3 — normalised net absorbance on day 0) × 100 where the normalised net absorbance is the measured net absorbance normalised to 100 μm film thickness (i.e. obtained by multiplying the measured net absorbance by: 100/film thickness in μm). Thus a value of 0 represents no discolouration, while a relatively high rating on this index corresponds to a relatively high rate of thermal degradation.

The rating on the "yellowing index" of films from the latex described in this Example was 2.

### Comparative Example 4

By way of comparison an aqueous copolymer latex was prepared by a similar method to that of Example 3 but having the following composition: 75.6 parts of vinylidene chloride; 6.2 parts of 2-ethylhexyl acrylate and 2.2 parts of acrylic acid per hundred parts of total vinylidene chloride and vinyl chloride. The rating of films from this latex on the "yellowing index" was 8.

### Comparative Example 5

An aqueous copolymer latex containing vinylidene chloride 64.7% vinyl chloride 14.3%; methyl methacrylate 19.0% and acrylic acid 2.0% was prepared by a method similar to that described in Example 1. (This copolymer composition corresponds to 82 parts of vinylidene chloride and 24 parts of methyl methacrylate per hundred parts of total vinylidene chloride and vinyl chloride).

The minimum film-forming temperature of the latex was 40°C. Coated steel panels were prepared from the latex as described in Example 1 except that tributyl phosphate (2% by weight based on total copolymer solids) was added before casting the film. In the thermal stability test (as described in Example 3) the rating on the yellowing test was 5.

### Comparative Example 6

An aqueous copolymer latex containing vinylidene chloride 67.9%; vinyl chloride 10.1%; 2-ethylhexylacrylate 20.0%; and acrylic acid 2.0% was prepared by a method similar to that described in Example 1. (This copolymer composition corresponds to 87 parts of vinylidene chloride and 25.5 parts of 2-ethylhexyl acrylate per hundred parts of total vinylidene chloride and vinyl chloride).

The minimum film-forming temperature of the latex was 3°C.

Coated steel panels were prepared from the latex as described in Example 1. In the thermal stability test (as described in Example 3) the rating on the yellowing test was 5.

### Example 7

Paints were prepared from each of the latices described in Examples 1, 2, and 3 using a standard "millbase" containing pigments.

The standard "millbase" consisted of (parts by weight):—

| | |
|---|---|
| zinc phosphate | 5.7 |
| micronised barytes | 8.3 |
| micronised red iron oxide | 2.6 |
| distilled water | 2.0 |
| "premix" | 8.9 |
| total "millbase" | 27.5 |

The "Premix" component of the "millbase" consisted of (parts by weight):—

| | |
|---|---|
| "Foamaster" NS | 0.1 |
| "Methocel" J12MS | 0.2 |
| dispersing agent | 1.0 |
| (30% aqueous solution of "Synperonic" PE 39/70) distilled water | 7.6 |
| | 8.9 |

("Foamaster", "Methocell" and "Synperonic" are trade marks. "Foamaster" NS is a propriety defoamer sold for addition to latex paints; the manufacturers do not disclose its composition. "Methocell" J12 is hydroxypropyl methyl cellulose sold as a water soluble polymeric thickener. "Synperonic" PE 39/70 is a polyethylene oxide/polypropylene oxide/polyethylene oxide block copolymer surfactant).

After thorough dispersion the pH of the "premix" was adjusted to pH 8.5 to 9.0 by addition of ammonia.

The paint formulation was prepared in each case by mixing 27.5 parts by weight of the "millbase" with the weight of the latex necessary to give in each case a paint containing 150 grams of total pigments per litre of the final paint formulation.

Before incorporation in the paint the latex was stabilised by addition of 'Synperonic' PE 39/70 (3% by weight on polymer content) and adjusted to pH 4 with ammonia.

The following were also incorporated during preparation of the final paint formulation (parts by weight per 27.5 parts of "millbase"):—

| | |
|---|---|
| "Foamaster" NS | 0.1 |
| Butyl ethoxol | 2.0 |
| sodium benzoate/sodium nitrate | 0.5 |

(20% aqueous solution containing 2 parts of benzoate per part of nitrate).

Samples of the paints were applied by Meyer bar to degreased mild steel panels. A first coat of wet thickness 100 μm was applied followed by a second coat of the same thickness 24 hours later. The panels were stored at room temperature for 7 days before being tested.

The paints based upon the latices described in Examples 1, 2, and 3 will be referred to as paints 1, 2, and 3 respectively.

In each case the coated panels passed 80 in. lb (92.2 kg cm) in the Impact Test referred to in Example 1 and had good adhesion (Gt 1 rating) in the Adhesion Test referred to Example 1.

In the salt spray test referred to in Example 1 the following results were obtained after 1000 hours exposure:—

Paint 1, medium-density blisters of rating 8

Paint 2, dense micro-blisters with few blisters of rating 8 and few blisters of rating 6

Paint 3, as for Paint 2

The panels were also tested by being soaked in distilled water for 14 days. The degree of blistering above and below the water-line was then assessed with the following results.

Paint 1, above few blisters of rating 8
below few blisters of rating 8

Paint 2, above no blisters
below no blisters

Paint 3, above few microblisters only
below no blisters

## Claims

1. An aqueous latex comprising a copolymer of (i) vinylidene chloride, (ii) vinyl chloride, (iii) one or more alkyl acrylates or alkyl methacrylates having from 1 to 12 carbon atoms in the alkyl group and (iv) one or more aliphatic alpha-beta unsaturated carboxylic acids, characterised in that:—

(a) the proportion of vinylidene chloride is from 50 to 75 parts by weight per hundred parts by weight of total vinylidene chloride and vinyl chloride,

(b) the proportion of vinylidene chloride is not more than 75 parts by weight per hundred parts by weight of total vinylidene chloride, vinyl chloride and the said acrylate(s) and/or methacrylate(s), and

(c) the proportion of the said acrylate(s) and/or methacrylate(s) is from 18 to less than 45 parts by weight per hundred parts by weight of total vinylidene chloride and vinyl chloride, said latex having a minimum film-forming temperature within the range of 6°C to 25°C.

2. A latex according to Claim 1, characterised in that the proportion of the unsaturated acid(s) is not more than 8 parts by weight per hundred parts by weight of total vinylidene chloride and vinyl chloride.

3. A latex according to either Claim 1 or Claim 2, characterised in that the proportion of vinylidene chloride is not more than 70 parts by weight per hundred parts by weight of the total vinylidene chloride, vinyl chloride and alkyl acrylate(s) and/or alkyl methacrylate(s).

4. A latex according to any of the preceding claims, characterised in that the proportion of alkyl acrylate(s) and/or alkyl methacrylate(s) is from 18 to 35 parts by weight per hundred parts by weight of total vinylidene chloride and vinyl chloride.

5. A latex according to any of the preceding claims, characterised in that the copolymer contains 2-ethylhexyl acrylate as the alkyl acrylate component.

6. A latex according to any of the preceding claims characterised in that the copolymer contains acrylic acid as the unsaturated acid component.

7. A paint composition comprising an aqueous latex claimed in any of the preceding claims.

8. A method of applying a protective coating to a metallic substrate characterised in that there is employed an aqueous latex as claimed in any of Claims 1 to 6 or a paint as claimed in Claim 7.

## Patentansprüche

1. Wäßriger Latex, enthaltend ein Copolymer aus (i) Vinylidenchlorid, (ii) Vinylchlorid, (iii) ein oder mehreren Alkylacrylaten oder Alkylmethacrylaten mit 1 bis 12 Kohlenstoffatomen in der Alkylgruppe und (iv) ein oder mehreren aliphatischen alpha-beta-ungesättigten Carbonsäuren, dadurch gekennzeichnet, daß

(a) der Anteil an Vinylidenchlorid 50 bis 75 Gewichtsteile je hundert Gewichtsteile Vinylidenchlorid und Vinylchlorid insgesamt ausmacht,

(b) der Anteil an Vinylidenchlorid nicht mehr als 75 Gewichtsteile je hundert Gewichtsteile Vinylidenchlorid, Vinylchlorid und Acrylat(e) und/oder Methacrylat(e) insgesamt ausmacht und

(c) der Anteil an Acrylat(en) und/oder Methacrylat(en) 18 bis weniger als 45 Gewichtsteile je hundert Gewichtsteile Vinylidenchlorid und Vinylchlorid insgesamt ausmacht,
wobei der Latex eine Mindestfilmbildungstemperatur im Bereich von 6 bis 25°C besitzt.

2. Latex nach Anspruch 1, dadurch gekennzeichnet, daß der Anteil an ungesättigter Säure bzw. ungesättigten Säuren nicht mehr als 8 Gewichtsteile je hundert Gewichtsteile Vinylidenchlorid und Vinylchlorid insgesamt ausmacht.

3. Latex nach Anspruch 1 oder 2, dadurch gekennzeichnet, daß der Anteil an Vinylidenchlorid nicht mehr als 70 Gewichtsteile je hundert Gewichtsteile Vinylidenchlorid, Vinylchlorid und Alkylacrylat(e) und/oder Alkylmethacrylat(e) insgesamt ausmacht.

4. Latex nach einem der vorhergehenden Ansprüche, dadurch gekennzeichnet, daß der Anteil an Alkylacrylat(en) und/oder Alkylmethacrylat(en) 18 bis 35 Gewichtsteile je hundert Gewichtsteile Vinylidenchlorid und Vinylchlorid insgesamt ausmacht.

5. Latex nach einem der vorhergehenden Ansprüche, dadurch gekennzeichnet, daß das Copolymer 2-Äthylhexylacrylat als Alkylacrylatkomponente enthält.

6. Latex nach einem der vorhergehenden Ansprüche, dadurch gekennzeichnet, daß das Copolymer Acrylsäure als ungesättigte Säurekomponente enthält.

7. Anstrichzusammensetzung, welche einen wäßrigen Latex nach einem der vorhergehenden Ansprüche enthält.

8. Verfahren zum Aufbringen eines Schutzbelags auf ein Metallsubstrat, dadurch gekennzeichnet, daß ein wäßriger Latex nach einem der Ansprüche 1 bis 6 oder eine Anstrichzusammensetzung nach Anspruch 7 verwendet wird.

## Revendications

1. Latex aqueux comprenant un copolymère (i) de chlorure de vinylidène, (ii) de chlorure de vinyle, (iii) d'un ou plusieurs acrylates d'alkyle ou méthacrylates d'alkyle ayant 1 à 12 atomes de carbone dans le groupe alkyle et (iv) d'un ou plusieurs acides carboxyliques aliphatiques à insaturation alpha-bêta, caractérisé en ce que:

(a) la proportion de chlorure de vinylidène est de 50 à 75 parties en poids pour 100 parties en poids du total du chlorure de vinylidène et du chlorure de vinyle,

(b) la proportion du chlorure de vinylidène n'est pas supérieure à 75 parties en poids pour 100 parties en poids du total du chlorure de vinylidène, du chlorure de vinyle et dudit ou desdits acrylate(s) et/ou méthacrylate(s) et

(c) la proportion dudit ou desdits acrylate(s) et/ou méthacrylate(s) va de 18 à moins de 45 parties en poids pour 100 parties en poids du total du chlorure de vinylidène et du chlorure de vinyle, ledit latex ayant une température minimale de formation d'un film comprise dans l'intervalle de 6 à 25°C.

2. Latex suivant la revendication 1, caractérisé en ce que la proportion de l'acide ou des acides insaturés n'est pas supérieure à 8 parties en poids pour 100 parties en poids du total du chlorure de vinylidène et du chlorure de vinyle.

3. Latex suivant la revendication 1 ou la revendication 2, caractérisé en ce que la proportion du chlorure de vinylidène n'est pas supérieure à 70 parties en poids pour 100 parties en poids du total du chlorure de vinylidène, du chlorure de vinyle et de l'acrylate ou des acrylates d'alkyle et/ou du méthacrylate ou des méthacrylates d'alkyle.

4. Latex suivant l'une quelconque des revendications précédentes, caractérisé en ce que la proportion d'acrylate(s) d'alkyle et/ou de méthacrylate(s) d'alkyle va de 18 à 35 parties en poids pour 100 parties en poids du total du chlorure de vinylidène et du chlorure de vinyle.

5. Latex suivant l'une quelconque des revendications précédentes, caractérisé en ce que le copolymère contient de l'acrylate de 2-éthylhexyle comme acrylate d'alkyle.

6. Latex suivant l'une quelconque des revendications précédentes, caractérisé en ce que le copolymère contient de l'acide acrylique comme composant acide insaturé.

7. Composition de peinture comprenant un latex aqueux suivant l'une quelconque des revendications précédentes.

8. Procédé d'application d'un revêtement protecteur sur un substrat métallique, caractérisé en ce qu'on utilise un latex aqueux suivant l'une quelconque des revendications 1 à 6 ou une peinture suivant la revendication 7.